# EUROPEAN PATENT SPECIFICATION

(11) **EP 2 602 406 B1**
(45) Date of publication and mention of the grant of the patent: **08.02.2017**
(21) Application number: 11813967.4
(22) Date of filing: 27.07.2011
(51) Int. Cl.: E04H 13/00, A61G 17/00, C02F 1/20

(54) **PROCESS FOR DECOMPOSING ORGANIC MATTER FROM INANIMATE BODIES IN AN AEROBIC ENVIRONMENT, INDUCED BY HEAT AND NEGATIVE PRESSURE**
VERFAHREN ZUR ZERSETZUNG ORGANISCHER SUBSTANZEN AUS LEBLOSEN KÖRPERN IN EINER AEROBEN UMGEBUNG, HERBEIGEFÜHRT DURCH HITZE UND UNTERDRUCK
PROCÉDÉ DE DÉCOMPOSITION DE MATIÈRE ORGANIQUE DE CORPS INANIMÉS DANS UN ENVIRONNEMENT AÉROBIE, INDUIT PAR CHALEUR ET PRESSION NÉGATIVE

(30) Priority: 06.08.2010 BR PI1003115
(43) Date of publication of application: 12.06.2013
(73) Proprietor: Ferrão, Péricles Valdir, Jundiaí - SP, Cep: 13207-780 (BR)
(72) Inventor: Ferrão, Péricles Valdir, Jundiaí - SP, Cep: 13207-780 (BR)
(74) Representative: May, Mark Andrew
(86) International application number: PCT/BR2011/000246
(87) International publication number: WO 2012/016308

(56) References cited:
- EP-A1- 1 072 737
- WO-A1-2010/133177
- BR-A2- PI0 901 817
- BR-U2- MU8 900 271
- DE-U1- 29 621 346
- ES-A1- 2 302 597
- US-A- 3 938 287
- US-A- 5 217 622
- US-A1- 2011 000 058

## Description

### SCOPE OF APPLICATION

This descriptive report refers to an **ORGANIC MATERIAL OF INANIMATE BODIES BREAK DOWN PROCESS IN AEROBIC ENVIRONMENT, DRIVEN BY HEAT, NEGATIVE PRESSURE AND GASES INACTIVATE EQUIPMENT FOR ORGANIC MATERIAL OF INANIMATE BODIES BREAK DOWN IN AEROBIC ENVIRONMENT, DRIVEN BY HEAT AND NEGATIVE PRESSURE**, which is mainly designated for the organic material of inanimate bodies of human organisms or animals transformation, with temporarily crossing by the liquid transformation (cadaverous liquid), in inoffensive (to the environment) gases and fumes.

### INVENTION SUMMARY:

**This ORGANIC MATERIAL OF INANIMATE BODIES BREAK DOWN PROCESS IN AEROBIC ENVIRONMENT, DRIVEN BY HEAT, NEGATIVE PRESSURE AND GASES INATIVATE EQUIPMENT FOR ORGANIC MATERIAL OF INANIMATE BODIES BREAK DOWN IN AEROBIC ENVIRONMENT, DRIVEN BY HEAT AND NEGATIVE PRESSURE,** makes possible vertical cemeteries construction in urban areas of cities, because transforms the traditional break down, which always results in cadaverous liquid production - which is a very pollutant liquid product and one of the biggest polluting of cities groundwater, specially in the areas where the traditional cemeteries (park type) are located - in gases break down, clean, breathing and no polluting.

The break down process, now proposed, has as main characteristic the liquid residual (cadaverous liquid, a virus, bacteria and high lethal chemical compounds - as the sulfidric gas - soup) transformation in breathing and no aggressive gases.

Following this process, resulting gases of cadaverous liquid formation, including the sulfidric gas, are collected inside of the cavities (tomb's denomination in vertical cemeteries) and taked to an equipment which's function is inactivate these harmful, polluting and lethal gases, making them breathing, non polluting or contaminating.

### INVENTION'S ANTECEDENTS:

The human or animal bodies, in traditional cemeteries, as the yard and vertical cemeteries, follows the same process since the beginning of times, where the bodies where left in a tomb and the break down occur in a natural way, most of times in air absence (anaerobic), and happen in the liquid way, with cadaverous liquid formation, because of time, normally long, and benefited just by the heat of the break down process itself, causing the ground contamination. Some vertical cemeteries adopts the anaerobic process of break down, where inevitably occur the cadaverous liquid production, which is in some way collected with an unknown destination. None bodies break down system, until this moment, has the guarantee of non pollution or contamination, because of the impossibility of holding the cadaverous liquid in the traditional cemeteries (or park type), despite the present days legal exigencies of ground sealing. It is absolutely impossible to guarantee that the quantity of produced cadaverous liquid goes to the design programmed destination, because of area and dimension considered. The same could be said for the anaerobic vertical cemeteries, where the cadaverous liquid is produced and has as initial destination a holding box and the final depends on the honesty and ethical principles of the operators.

Such a known decomposition process is described by US 5 217 622 A1.

### INVENTION'S OBJECTIVES:

The solution to the above described
problem is defined by appended claim 1.

To eliminate all these inconvenient, was developed the **ORGANIC MATERIAL OF INANIMATE BODIES BREAK DOWN PROCESS IN AEROBIC ENVIRONMENT, DRIVEN BY HEAT, NEGATIVE PRESSURE AND GASES INACTIVATE EQUIPMENT FOR ORGANIC MATERIAL OF INANIMATE BODIES BREAK DOWN IN AEROBIC ENVIRONMENT, DRIVEN BY HEAT AND NEGATIVE PRESSURE**, which refers to a extremely simple and efficient process, very economic and with high speed of fluid vaporization.

Process consists in keeping the body in break down process, human or animal in air-locked cavity. In this cavity are located two small tubes, carefully dimensioned: the first one is designed for filtered air insertion, which will have the function of induct the vaporization and oxidation; the second one will have the function of remove gases produced during liquid vaporization. Volume of gases removal is bigger than capacity of filtered and fresh air inlet, creating a negative pressure inside of the cavity, which makes the break down and the liquid vaporization faster, maximized by the heat created by the break down process, naturally exothermic.

This innovating process, never formalized before, creates economical and ecological advantages for one of the biggest problems of humanity, which is the final destination of your similar scraps, in a natural, clean, ecological, Christian and non polluting way.

The break down process, as now proposed, generates big economy, as much as in the physical area necessary for the bodies storage, as in the needed time for exhumation or total break down.

The area economy refers to a physical spaces occupied by the graves, because in this process, designated vertical cemetery, the necessary area for its installation is dozens of times smaller than the necessary in traditional cemeteries.

Exhumation time reduction is, also, a relevant economy in this process, because allows the exhumation to be done in half of the necessary time for the traditional ways of break down, allowing bigger rotation of cavities use.

The bigger rotation of cavities use and the drastically reduction of needed areas for the cavities installation allows a better urban distribution of cemeteries, allowing the reduction of quantity of graves related to the user population.

One of the main finalities of this process is the guarantee that toxically and poisoned remains, generated by organic material of bodies break down, will be handled by the gases inactive equipment. In addition of the remains being handled inside of the system itself, there is a direct monitoring of what goes to the atmosphere, through only one tube, perfectly identified and known. This process, absolutely direct, stable and without variation allows that intervention, for quality gauging of gases threw to atmosphere, have a very long periodicity by the inflexibility of its operation.

Unfortunately, it doesn't happen in the other cemeteries, with its traditional procedures of break down, where the generated remains, as the cadaverous liquid, contaminates the ground and the environment and, if they are collected, they don't have a specific destination, compromising, in the same way, the environment.

Highlighted the characteristics of this **ORGANIC MATERIAL OF INANIMATE BODIES BREAK DOWN PROCESS IN AEROBIC ENVIRONMENT, DRIVEN BY HEAT, NEGATIVE PRESSURE AND GASES INACTIVATE EQUIPMENT FOR ORGANIC MATERIAL OF INANIMATE BODIES BREAK DOWN IN AEROBIC ENVIRONMENT, DRIVEN BY HEAT AND NEGATIVE PRESSURE,** we will describe the transformation process of organic material, organic material break down in gases and fumes and its handling, for the inactivation of that considered pollutant or aggressive, in the installation and dedicated equipment that composes it.

### DRAWING DESCRIPTION:

For a more clear visualization of how is the reference process constituted, as well the operation and working behavior of involved equipment, we present a schematic drawing demonstrating phases of transformation process.

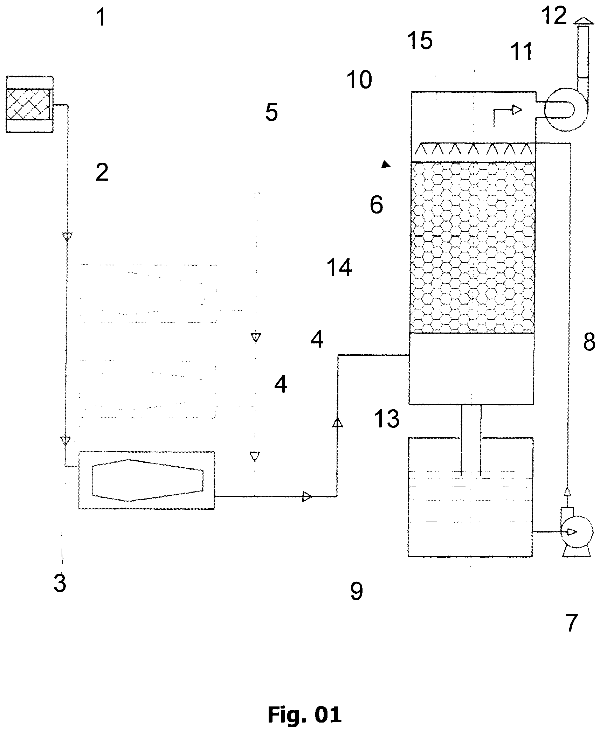

Figure 1 - Schematic view demonstrating the break down process of material in a cavity, linked to a gases inactivate equipment.

According to the image, **ORGANIC MATERIAL OF INANIMATE BODIES BREAK DOWN PROCESS IN AEROBIC ENVIRONMENT, DRIVEN BY HEAT, NEGATIVE PRESSURE AND GASES INACTIVATE EQUIPMENT FOR ORGANIC MATERIAL OF INANIMATE BODIES BREAK DOWN IN AEROBIC ENVIRONMENT, DRIVEN BY HEAT AND NEGATIVE PRESSURE**, this process' first step is the air filtering system (1). This system finality is to avoid the access, in the break down process, of unknown or undesirable elements like insects and spores, that in contact with the body in break down process, which is humid, hot and rich in nutrients, what is an adequate micro-system for its reproduction, generates thousands of flying insects, which could change planned condition for system's working behavior, what could cause airlock, slowdown of gases speed inside the tubes and the reduction and alteration of chemical reactions of gases inactivate.

This system's filter must have the adequate dimension to avoid these contaminants, and also dust, access and it could be made by dry elements of paper or cloth or chemical or electrostatic filters as well.

The **second step** of this process is the fresh and filtered air transportation by the tube (2) access to the cavity (3). In this step, the air speed and the volume of gases removed from the cavity are so important to determine the internal pressure, which should be negative to accelerate the break down process, but of small value to avoid humidity and light organic material (like hair and part or clothes) flow.

The **third step** of this process is inside of cavities (3) where occur the assisted break down, what is the main and essential characteristic.

At this step occurs the organic material break down into gases. At this point of process there will be the heat irradiation in the natural way, because of bodies break down and the negative pressure performed by an extractor fan (11) located at the end of system.

Acting together this system parts make smaller the time for break down, which is initially liquid, becoming gas after. This procedure is one of the proposes of this process, and guarantee the economic aspect represented by the time reduction on break down and time reduction for expected time for exhumation to half time of traditional, allowing bigger rotation on cavities use, what economically means the possibility of building smaller cemeteries.

The **forth step** of this process is concentrated in the conduction tubes (4) of gases generated in the cavities and suctioned by the gases inactivate equipment (5). This step has fundamental importance because determines gases speed and the negative pressure desired inside of the cavities (3). Tubes dimension (4) is determined by your length and by the quantity of cavities. The designed speed must be enough to remove bigger volume of gases than the capacity of fresh and filtered air feed, as described at the second step, what keeps the desired pressure inside of the cavities. Losses on filter, filtered air conduction filters and cavities are considered for the above dimensioning. The procedure for gases speed and negative pressure is dynamic, its control is essential, because at this step gases generated at break down are conducted, including the H₂S (sulfidric gas), the most important, highly lethal, powerful explosive and of extreme bad smell. Despite of being hold, requires careful and attention until the arrival at the gases inactivate equipment, where will become an innocuous material, that could be threw to atmosphere.

The **fifth step** of this process occur inside of gases inactivate equipment (5), where occur the transformation of pollutant and contaminating gases into breathing gases. At this step, pollutant gases fills an incoming box (13) and are aspirated to an outbox (14), going compulsorily by an area where there are obstacles like Raschig rings or other type of material, or
dispositive, with the same function of increase contact area between gases and the alkaline liquid, wherein a chemical pump, that is responsible for the circulation of the alkaline liquid between the chambers and throwing it through one or more small showers in the second chamber with the obstacles, guarantee total efficiency on chemical exchanges.
Negative pressure inside of equipment makes the alkaline liquid, broke by the obstacles, pulverized like cloud, increasing contact area with gases and making the procedure highly efficient.

The **sixth step** is the last one, where inactivate gases are removed from the equipment by the extractor fan (11), responsible of the negative
pressure, and threw to atmosphere, as breathing gases, through an exit (12).

### PROCESS DESCRIPTION:

Described process removes gases generated by bodies break down and the gases flow is obligated to go through, in an ascending way, by the washing tower and against the caustic soda flow. The caustic soda solution is pumped by a centrifugal pump, which keeps continuous flow, wetting, in a descendent way, all the inside and the Raschig rings of absorption column.

With contact area maximized, by the Raschig rings placed in the
absorption column, the reaction of gases that comes from the cavities with the caustic soda is easier and it will lead to a high performance on chemical reactions, eliminating gases that are harmful to the environment, inside of the absorption column, adequately designed for flows of each process.

### MAIN REACTIONS OF PROCESS:

As main reactions of absorption gases process, we have:
The sodium hydroxide becomes a strong alkaline solution when dissolved in water.

Reaction with carbon gas (CO₂).

The caustic soda easily absorbs the carbon dioxide that comes from the process.

The chemical reaction between the caustic soda and the CO₂ is commonly called carbonation and is demonstrated on the equation below:

2 NaOH + CO2 → Na2CO3 + H2O

This reaction occurs in two steps. First, CO₂ reacts with water until forming the carbonic acid:

H2O + CO2 → H2CO3

After, the carbonic acid reacts with caustic soda until form the sodium carbonate.

2 NaOH + H2CO3 → Na2C03 + 2 H2O

### Reaction with acids:

The hydroxide anion makes the sodium hydroxide a strong base that reacts with acids forming water and the corresponding salts. In this process, the sulfidric gas, dissolved in water, forms a solution of sulfidric gas and, immediately, the caustic soda reacts to form the sodium sulfide:

2NaOH(aq) + H2S(aq) → Na2S(aq) + H2O(I)

In both of mentioned reactions, the caustic soda solution is avid for the acid that makes the reactions with strong tendency of shifting for the reacting side, eliminating the toxic generated gases.

### Process Control

Adjust concentration range of caustic soda between 5% and 30%, better if the concentration is around 10%.

The solution concentration must be controlled and adjusted during process, to keep high absorption and harmful gases elimination yield.

For process yield guarantee, while pH of caustic soda solution keeps high is guaranteed, in the absorption tower, the elimination of gases generated by bodies in break down process

### PREFERRED EQUIPMENT DESCRIPTION

The GASES INACTIVATE EQUIPMENT for vertical cemeteries could have dimension and variable size, depending on quantity of gases to be handled or on the quantity of cavities of the cemetery.

Could be built in carbon steel, stainless steel or plastic, since they are resistant to alkaline solutions.

This equipment has three chambers. The first one (13) is designed for reception of gases that come from break down. The second chamber (14) is designed for obstacles or Raschig rings, where it will encounter the
alkaline liquid, performing the chemical reactions that will transform the harmful gases, generated by bodies break down, in breathing air. The third chamber (15) is designed for hed gases reception and its threw to the atmosphere. The extractor fan (11) is connected to this chamber.

It is part of the equipment, besides of the extractor fan, that is responsible for the gases circulation, a chemical pump (7), that is responsible for the circulation of the alkaline liquid, what could be a caustic soda solution, between 5% and 30% (better 10%), between the chambers, taking it from a storage (9), independent of chambers and throwing it through one or more small showers (10), in the chamber (14) with the obstacles (6). Pressure desired control is kept between 5 and 300 mmwc (millimeter of water column).

Devices that keeps desired pressure stability could be mechanical, constituted by dampers in the inlet or in the exit of extractor fan, or by valves adjusted to allow entry of fake air, reducing or increasing the extractor fan capacity.

Preferably, these devices could be electronic, constituted by a pressure controller, pressure measurer, which controls motor rotation of extractor fan or dampers.

Despite of detailed the invention, it is important to say that it doesn't restrict its application to described details and steps. The invention is able to perform other procedures and to be executed in a variety of modes, falling under the scope of the present invention, as defined by the appended claims.

## Claims

1. ORGANIC MATERIAL OF INANIMATE BODIES BREAK DOWN INACTIVATE PROCESS, IN AEROBIC ENVIRONMENT, DRIVEN BY HEAT AND NEGATIVE PRESSURE, using airtight cavities, submitted to negative pressure for break down acceleration and liquid vaporization, maximized by heat generated during the break down process, naturally exothermic, for the transformation of cadaverous liquid, generated during inanimate bodies of human and animals break down, highly toxic and pollutant, in clean gases, breathing and not pollutant, **characterized in that** the process comprises:
- at first step, the air filtering by an air filtering system (1), that obstruct dust and contaminating elements;
- at second step, the transportation of fresh and filtered air by a first tube (2) of cavity access (3), where volume of gases and speed of air removed from inside of the cavity (3) are determined in way that
its internal pressure keeps negative to keep the break down accelerated, however the pressure has small value to avoid humidity and light organic material flow;
- at third step, the irradiation of natural heat from the break down and the negative pressure mechanically made by an extractor fan (11);
- at fourth step, the conduction, by second tubes (4), of gases generated inside of cavity (3), to be removed by a gases inactivate equipment (5) comprising a washing tower, which determines gases speed according to the
desired negative pressure inside of the cavity (3), whereby the dimension of said second tubes (4) is
determined by its length and quantity of cavities, with gases removal speed bigger than in the air filtered tube and gases speed and negative pressure dynamically controlled;
- at fifth step, the transformation of pollutant and contaminating gases inside of said gases inactivate
equipment (5), being inserted inside a first chamber (13) and obligatorily flowing to a second
chamber (14), through an area within an absorption column, containing obstacles, like Raschig rings, or other kind of material or devices that increases the contact area between the gases and an alkaline liquid, being a caustic soda solution, wherein a chemical pump (7) that is responsible for the circulation of the alkaline liquid between the chambers and throwing it through one or more small showers (10) in the second chamber (14) with the
obstacles (6), guaranteeing total efficiency on chemical changes, because the negative pressure kept inside of the equipment allows the alkaline liquid, broke down by the obstacles or Raschig rings, to be pulverized, in form of clouds, increasing the contact area with gases, making the procedure highly efficient;
- at sixth step the removal of inactivate gases from said gases inactivate equipment (5), by the extractor fan (11), responsible for the negative pressure, and its thrown to the atmosphere, as breathing gases, through an exit (12).

2. PROCESS, according to claim 1, **characterized by** the fact of gases generated by bodies break down have ascendant forced flow through the washing tower, against the caustic soda solution flow.

3. PROCESS, according to claim 2, **characterized by** the fact, that the caustic soda solution is pumped, in
continuous descendent flow, to wet all the Raschig rings of the absorption column.

4. PROCESS, according to claim 3, **characterized by** the fact of contact area is maximized by said Raschig rings of the absorption column, making easier the reaction of gases with the caustic soda solution.

## Patentansprüche

1. Verfahren zum Zersetzen von organischem Material lebloser Körper in einem Inaktivierungsprozess in aerober Umgebung, angetrieben durch Wärme und negativen Druck, unter Verwendung luftdichter Hohlräume und negativem Druck zum Beschleunigen des Zersetzens und Verdampfens von Flüssigkeit, maximiert durch die während des Zersetzungsprozesses erzeugte Wärme, wobei der Prozess natürlicherweise exotherm ist, zur Umwandlung von Leichenflüssigkeit, die während des Zersetzens lebloser menschlicher und tierischer Körper gebildet wird und hoch toxisch und verschmutzend ist, in saubere atembare und nicht verschmutzende Gase,
**dadurch gekennzeichnet, dass** das Verfahren folgende Schritte umfasst:
• in einem ersten Schritt das Filtrieren von Luft mittels eines Luftfiltersystems (1), welches Staub und kontaminierende Bestandteile zurückhält;
• in einem zweiten Schritt den Transport von frischer und filtrierter Luft mittels eines ersten Rohrs (2) eines Zugangs zum Hohlraum (3), wobei das Volumen der Gase und die Geschwindigkeit der aus dem Inneren des Hohlraums (3) entfernten Luft so festgelegt wird, dass dessen Innendruck zum Beibehalten des beschleunigten Zersetzens negativ bleibt, wobei der Druck jedoch zum Vermeiden von Luftfeuchtigkeit und des Strömens von leichtem organischen Material einen niedrigen Wert hat;
• in einem dritten Schritt das Erwärmen mittels natürlicher Wärme aus dem Zersetzungsprozess und dem mechanisch durch ein Absauggebläse (11) erzeugten negativen Druck;
• in einem vierten Schritt das Ableiten von in dem Hohlraum (3) gebildeten und zu entfernenden Gasen durch zweite Rohre (4) über eine Inaktvierungsapparatur (5), die eine Waschkolonne umfasst, wobei die Geschwindigkeit der Gase gemäß dem gewünschten negativen Druck innerhalb des Hohlraums (3) festgelegt wird, wodurch die Dimension der zweiten Rohre (4) durch ihre Länge und die Anzahl an Hohlräumen bestimmt ist, wobei die Gas-Austragsgeschwindigkeit größer ist als in dem Luftfilterrohr und die Geschwindigkeit der Gase und der negative Druck dynamisch gesteuert werden;
• in einem fünften Schritt das Umwandeln der verschmutzenden und kontaminierenden Gase in der Gas-Inaktivierungsapparatur (5), welche in eine erste Kammer (13) geführt werden und die obligatorisch durch einen Bereich mit Hindernissen, wie Raschig-Ringe oder einer anderen Art Material oder Vorrichtungen, die die Kontaktfläche zwischen den Gasen und einer alkalischen Flüssigkeit, welches eine Natronlauge ist, vergrößert, zu einer zweiten Kammer (14) strömen, in der eine für die Zirkulation der alkalischen Flüssigkeit zwischen den Kammern verantwortliche chemische Pumpe (7) dieselbe durch eine oder mehrere kleine Brausen (10) in der zweiten Kammer mit den Hindernissen (6) austrägt, wodurch die Gesamteffizienz der chemischen Veränderungen sichergestellt wird, weil der in der Apparatur gehaltene negative Druck der alkalischen Flüssigkeit, die durch die Hindernisse oder Raschig-Ringe aufgeteilt wird, ermöglicht in Form von Wolken zerstäubt zu werden, was die Kontaktflächen mit den Gasen erhöht und den Prozeß hocheffizient macht;
• in einem sechsten Schritt des Entfernen inaktivierter Gase aus der Gas-Inaktivierungsapparatur (5) durch das für den negativen Druck verantwortliche Absauggebläse (11) und Austragen in die Atmosphäre als atembare Gase durch einen Austritt (12).

2. Verfahren nach Anspruch 1, **dadurch gekennzeichnet, dass** die von dem Zersetzen von Körpern gebildeten Gase eine aufsteigende, durch die Waschkolonne gezwungene Strömung gegen den Fluss der Natronlaugen aufweisen.

3. Verfahren nach Anspruch 2, **dadurch gekennzeichnet, dass** die Natronlauge in einem kontinuierlichen absteigenden Strom zum Benetzen aller Raschig-Ringe der Absorptionskolonne gepumpt wird.

4. Verfahren nach Anspruch 3, **dadurch gekennzeichnet, dass** die Kontaktfläche durch die Raschig-Ringe der Absorptionskolonne maximiert wird, wodurch die Reaktion von Gasen mit der Natronlaugelösung erleichtert wird.

## Revendications

1. Un méthode pour décomposer le corps de matière organique inanimée dans un processus d'inactivation en milieu aérobie, entraînée par la chaleur et la pression négative en utilisant des cavités étanches à l'air et une pression négative pour accélérer la décomposition et l'évaporation du liquide, maximisé par la chaleur générée pendant la chaleur de processus de décomposition, le processus est naturellement exothermique, pour la conversion du fluide de cadavre des corps humain et animal inanimée formé lors de la décomposition et qui sont hautement toxique et polluant, en gaz respirables et non polluants propres,
**caractérisé en ce que** le procédé comprend les étapes consistant à:
• dans une première étape une filtration de l'air par un système de filtre à air (1), laquelle retiens la poussière et les composants contaminants;
• dans une deuxième étape, le transport de l'air frais et filtré au moyen d'un premier tube (2) d'un accès à la cavité (3), dans lequel le volume des gaz et le débit de l'intérieur de la cavité (3) de l'air à distance est déterminée de telle sorte que la pression interne est négative pour le maintien de la décomposition accélérée, la pression, toutefois, afin d'éviter l'écoulement de l'humidité et de la matière organique de lumière présente une valeur faible;
• dans une troisième étape, le chauffage par la chaleur naturelle à partir du procédé de décomposition et la pression négative générée mécaniquement par un ventilateur d'évacuation (11);
• dans une quatrième étape, la conduction des gaz formée dans la cavité (3) et lesquels doit être éliminer par une appareille d'inactivation (5), comprenant une colonne de lavage, dans laquelle la vitesse des gaz est déterminée en fonction de la pression négative souhaitée à l'intérieur de la cavité (3), comment la dimension des seconds tubes (4) est déterminé par leur longueur et leur quantités de vides, dans lequel ladite vitesse de décharge de gaz est plus grande que dans le conduit du filtre à air et la vitesse des gaz et la dépression sont commandées de manière dynamique;
• dans une cinquième étape, la conversion des gaz nocifs et contaminants dans l'appareille d'inactivation de gaz (5), qui sont guidés dans une première chambre (13) et l'obligatoire l'écoulement dans une zone avec des obstacles, tels que les anneaux de Raschig ou autre type de matériel ou de dispositifs ce qui augmente la surface de contact entre les gaz et le liquide alcalin, qui est une solution d'hydroxyde de sodium, à une deuxième chambre (14), dans laquelle une pompe (7) pour la circulation de la liquide alcalin déchargé la même à travers une ou plusieurs petites pommes de douche (10) débouche dans la deuxième chambre avec les obstacles (6), par lequel l'efficacité globale des changements chimiques est assurée, parce que la valeur de la pression négative du liquide alcalin contenue dans l'appareil, qui est divisé par les obstacles ou les anneaux de Raschig permet, sous la forme à atomiser par les nuages, ce qui augmente les zones de contact avec les gaz et rend le processus très efficace;
• dans une sixième étape, l'élimination des gaz inactivés du l'appareille d'inactivation de gaz (5) par le ventilateur d'extraction(11) responsable de pression négative et débouchant dans l'atmosphère sous forme de gaz respirable à travers une sortie (12).

2. Méthode selon la revendication 1, **caractérisé en ce que** les gaz formés par le la décomposition des corps ont une force ascendante à travers le flux de la colonne de lavage à contre-courant d'une solution d'hydroxyde de sodium.

3. Méthode selon la revendication 2, **caractérisé en ce qu'**une solution d'hydroxyde de sodium est pompée en continu dans un courant descendant pour mouiller tous les anneaux Raschig de la colonne d'absorption.

4. Méthode selon la revendication 3, **caractérisé en ce que** la surface de contact est optimisée par les anneaux Raschig de la colonne d'absorption, de sorte que la réaction des gaz avec la solution d'hydroxyde de sodium est facilitée.
